# EUROPÄISCHE PATENTSCHRIFT

(11) **EP 0 652 535 B1**
(45) Veröffentlichungstag und Bekanntmachung des Hinweises auf die Patenterteilung: **04.12.2002**
(21) Anmeldenummer: 94810591.1
(22) Anmeldetag: 10.10.1994
(51) Int. Cl.: G06K 17/00, G06F 17/60

(54) **Vorrichtung zur Erstellung von visuell lesbaren Datenträgern für die Abwicklung des Warenverkehrs eines Einzelhändlers**
Device for manufacturing visually readable data carriers for managing the circulation of retailers' goods
Dispositif pour l'établissement de porteurs de données pour la gestion de la circulation de marchandises d'un détailleur

(30) Priorität: 08.10.1993 CH 302593
(43) Veröffentlichungstag der Anmeldung: 10.05.1995
(73) Patentinhaber: Cash + Carry Angehrn AG, CH-9202 Gossau SG (CH)
(72) Erfinder: Angehrn-Müller, Paul, CH-9032 Engelburg SG (CH)

(56) Entgegenhaltungen:
- EP-A- 0 037 649
- DE-A- 3 632 754
- GB-A- 2 249 416
- US-A- 4 340 810

## Beschreibung

Die Erfindung betrifft eine Vorrichtung zur Erstellung von visuell lesbaren Datenträgern für die Abwicklung des Warenverkehrs eines Einzelhändlers, insbesondere für die Steuerung des Waren- und Informationsflusses zwischen einem Abholgrosshändler und einem seine Waren von diesem beziehenden Einzelhändler. Im Konkreten betrifft die Erfindung eine Vorrichtung zur Erstellung von Regalpreisschildern und Einkaufslisten für den Einzelhändler.

Kleinere und mittlere Einzelhändler, insbesondere in der Lebensmittelbranche, beziehen ihre Waren in der Regel bei Grossverteilern, in selteneren Fällen und auch dann nur teilweise auch direkt beim Produzenten. Eine typische Bezugsquelle für solche Einzelhändler sind Abholgrossmärkte, sog. Cash & Carry - Grossmärkte (CC). Dasselbe gilt vielfach auch für Restaurants, Hotels und ähnliche Betriebe.

Abholgrosshändler bieten ihren wiederverkaufenden Kunden vielfach Unterstutzung bei der Organisation ihres Betriebs bzw. der Geschäftsabwicklung. Eine dieser verkaufunterstützenden Hilfestellungen besteht unter anderem in der Vorgabe von Richt-Verkaufspreisen für die angebotenen Waren, wobei der Einzelhändler, sofern er nicht einer Kette oder ähnlichen Organisation angeschlossen ist, an diese Richt-Verkaufspreise aber nicht gebunden ist.

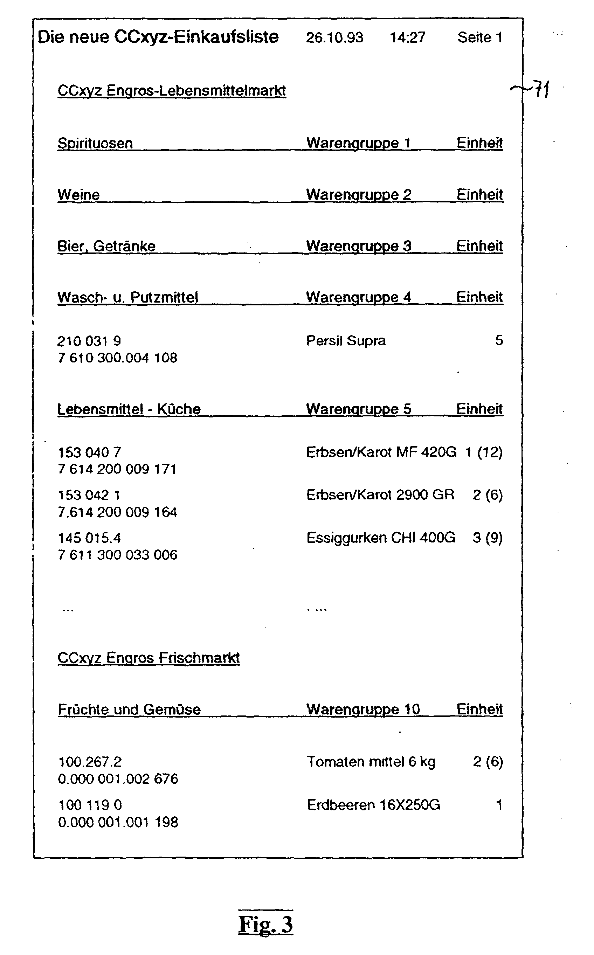

In Selbstbedienungsläden nicht nur des Einzelhandels ist es weit verbreitet, die zum Verkauf angebotenen Waren in Regalen anzuordnen, wobei der Trend dahin geht, nicht mehr jede einzelne Ware mit einem individuellen Preisschild zu versehen, sondern an den Regalen sogenannte Regalpreisschilder anzubringen, die natürlich in geeigneter räumlicher Zuordnung zu den feilgebotenen Waren angeordnet werden, so dass der Kunde den zur Ware gehörigen Verkaufspreis ohne Schwierigkeiten erkennen kann. Solche Regalpreisschilder werden in der Regel an horizontalen Stirnflächen der Regale befestigt und sind praktisch z.B. als selbstklebende Etiketten ausgebildet oder können in speziell für diesen Zweck erhältliche Schienen eingesteckt werden. Üblicherweise enthalten solche Regalpreisschilder eine Warenbezeichnung sowie Preis- und Mengenangaben in Klartext und ein einen maschinell lesbaren Code mit diversen Warenidentitikationsinformationen wie z.B. eine Artikelnummer und dgl.. Ein typisches Beispiel eines solchen Regalpreisschilds ist in Fig. 2 dargestellt. Bei Waren, die aus welchen Gründen auch immer nicht in Regalen angeordnet werden, wie z.B. Obst und Gemüse, werden meistens spezielle Träger für die Preisschilder verwendet. Im folgenden werden unter Regalpreisschildern auch auf solchen Trägern angeordnete Preisschilder verstanden.

Wenngleich die Verwendung von Regalpreisschildern gegenüber der Einzelauspreisung der Waren eine offensichtliche Arbeitseinsparung für den Einzelhändler bedeutet, ist bei den üblicherweise häufig wechselnden Wiederverkaufspreisen, insbesondere auch im Zusammenhang mit häufigen Sonderaktionen etc., der für die Anpassung der Regalpreisschilder erforderliche Aufwand immer noch beträchtlich. Es stehen dazu zwar schon spezielle computergesteuerte Druckgerate zur Verfügung, mit denen sich solche Regalpreisschilder in ansprechender Qualität relativ einfach herstellen lassen, die Eingabe der entsprechenden Daten bzw. deren Änderungen zur Steuerung dieser Geräte ist jedoch nach wie vor ein mühsamer und arbeitsintensiver Prozess.

Eine weitere mühsame Routine-Tätigkeit, mit der sich der Einzelhändler regelmässig konfrontiert sieht, ist die Erstellung einer Einkaufsliste für die beim Ahholgrosshändler zu beschaffenden Waren. Er muss dazu in der Regel eine genaue Aufstellung nach Warenbezeichnungen, Warennummern, Verpackungseinheiten, Bestellmengen und eventuellen anderen relevanten Kriterien anfertigen, was in vielen Fällen mit nicht unerheblichem Aufwand verbunden ist.

GB-A- 2 249 416 beschreibt ein Lagerhaltungssystem bei dem Artikeldaten im Computersystem des Einzelhändlers durch das Computersystem des Großhändlers aktualisiert werden. Bestellungen werden über Modems zum Großhändler übertragen. Dort wird eine Liste der bestellten Artikel gedruckt und die Artikel werden entsprechend der Liste zusammengestellt.

Die vorliegende Erfindung beschäftigt sich nun genau mit dieser Problematik und hat zum Ziel, dem Einzelhändler bei der Abwicklung der genannten, mehr oder weniger regelmässig anfallenden Arbeiten erleichternd zur Hand zu gehen. Im Konkreten soll dazu durch die Erfindung eine Vorrichtung zur Verfügung gestellt werden, welche die im Zusammenhang mit der Preisauszeichnung und der Erstellung von Einkaufslisten anfallenden Arbeiten weitestgehend zu automatisieren und auf ein Mindestmass zu reduzieren gestattet. Insbesondere soll durch die Erfindung eine Vorrichtung geschaffen werden, die eine rationelle und weitestgehend selbsttätige Erstellung von visuell lesbaren Datenträgern, wie sie z.B. Regalpreisschilder oder Einkaufslisten darstellen, ermoglicht.

Die Vorrichtung, die diese der Erfindung zugrundeliegende Aufgabe lost, enthält gemäss dem Hauptgedanken der Erfindung :
- einen Hauptrechner für den Abholgrosshändler, welcher Hauptrechner
   - mit einem Hauptspeicher ausgestattet ist, der warensortimentspezifische Warendaten, insbesondere Einzelhändler-Richtverkaufspreise enthalt.
   - mit einem Schilderdrucker zum Ausdrucken von Klartext und codierte Warendaten tragenden Regalpreisschildern für den Einzelhändler zusammenarbeitet,
   - und mit einem ersten Schreib/Lesegerät für ein transportables nicht-fluchtiges Speichermedium ausgestattet ist,
- sowie einen Handrechner für den Einzelhändler, welcher Handrechner
   - mit einem zweiten Schreib/Lesegerät für das genannte transportable Speichermedium ausgestattet ist,
   - mit einem optischen Handleser (Hand-Scanner) zum Einlesen von auf den Regalpreisschildern des Einzelhändlers enthaltenen Warendaten in den Handrechner zusammenarbeitet,
   - und mit einem Listendrucker zum Ausdrucken einer Wareneinkautsliste für den Einzelhändler zusammenarbeitet,
- wobei der Hauptrechner dazu ausgebildet ist,
   - für den Einzelhändler relevante sortimentspezifische Warendaten über das genannte erste Schreib/Lesegerät auf das transportable Speichermedium zu schreiben und
   - aufgrund eingegebener oder mittels eines mit ihm zusammenarbeitenden optischen Hauptlesers (Scanners) eingelesener Daten über einen vom Einzelhändler beim Abholgrosshändler getätigten Wareneinkauf und der im Hauptspeicher enthaltenen warensortimentspezifischen Warendaten entsprechende, die eingekauften Waren betreffende Regalpreisschilder über den Schilderdrucker auszudrucken,
- und wobei der Handrechner dazu ausgebildet ist,
   - die auf dem transportablen Speichermedium enthaltenen Warensortimentspezifischen Warendaten über das genannte zweite Schreib/Lesegerät einzulesen und
   - aufgrund dieser warensortimentspezifischen Warendaten und von mittels des optischen Handlesers von den Regalpreisschildern des Einzelhändlers abgelesenen Warendaten sowie von manuell eingegebenen Mengenangaben über den Listendrucker eine nach festgelegten Kriterien, insbesondere nach Warengruppen sortierte Einkaufsliste für den Einzelhändler auszudrucken.

Gemäss einer vorteilhaften Weiterbildung der Erfindung weist die Vorrichtung zusätzlich einen mit dem Handrechner zusammenarbeitenden Bon-Drucker auf, wobei der Handrechner dazu ausgebildet ist, aufgrund von mittels des optischen Handlesers von auf Waren angebrachten Code-Feldern abgelesenen Warendaten ggf. in Verbindung mit den im Handrechner gespeicherten warensortimentspezifischen Warendaten einen Klartext-Verkaufs-Bon betreffend an einen Kunden des Einzelhändlers verkaufte Waren über den Bon-Drucker auszudrucken.

Gemäss einer weiteren vorteilhaften Ausgestaltung der erfindungsgemässen Vorrichtung ist das transportable nicht-flüchtige Speichermedium eine aus elektrisch les- und beschreibbaren Speicherbausteinen aufgebaute Speicherkarte.

Nach einer weiteren, besonders zweckmässigen Ausgestaltung der erfindungsgemässen Vorrichtung ist der Handrechner ferner auch noch dazu ausgebildet, aufgrund von mittels des optischen Handlesers von auf Waren angebrachten Code-Feldern abgelesenen Warendaten ggf. in Verbindung mit den im Handrechner gespeicherten warensortimentspezifischen Warendaten sowie von manuell eingegebenen Mengenangaben ein Inventur-Protokoll zu erstellen und über den Listendrucker auszudrucken.

Die erfindungsgemässe Vorrichtung besteht also aus einem speziellen Verbund von lokal getrennten Rechnern mit jeweils zugeordneten speziellen Peripheriegeräten, wobei die Rechner so programmiert sind, dass sie die genannten Funktionen ausführen und die Peripheriegeräte entsprechend ansteuern können.

Weitere Einzelheiten und Vorteile der Erfindung werden nachstehend anhand eines Ausführungsbeispiels der erfindungsgemässen Vorrichtung in Verbindung mit der Zeichnung näher erläutert. In der Zeichnung zeigen:
- Fig. 1: ein Blockdiagramm einer erfindungsgemässen Vorrichtung,
- Fig. 2: ein Beispiel eines mit der Vorrichtung erstellten Regalpreisschilds und
- Fig. 3: ein Beipiel einer mit der Vorrichtung erstellten Einkaufsliste.

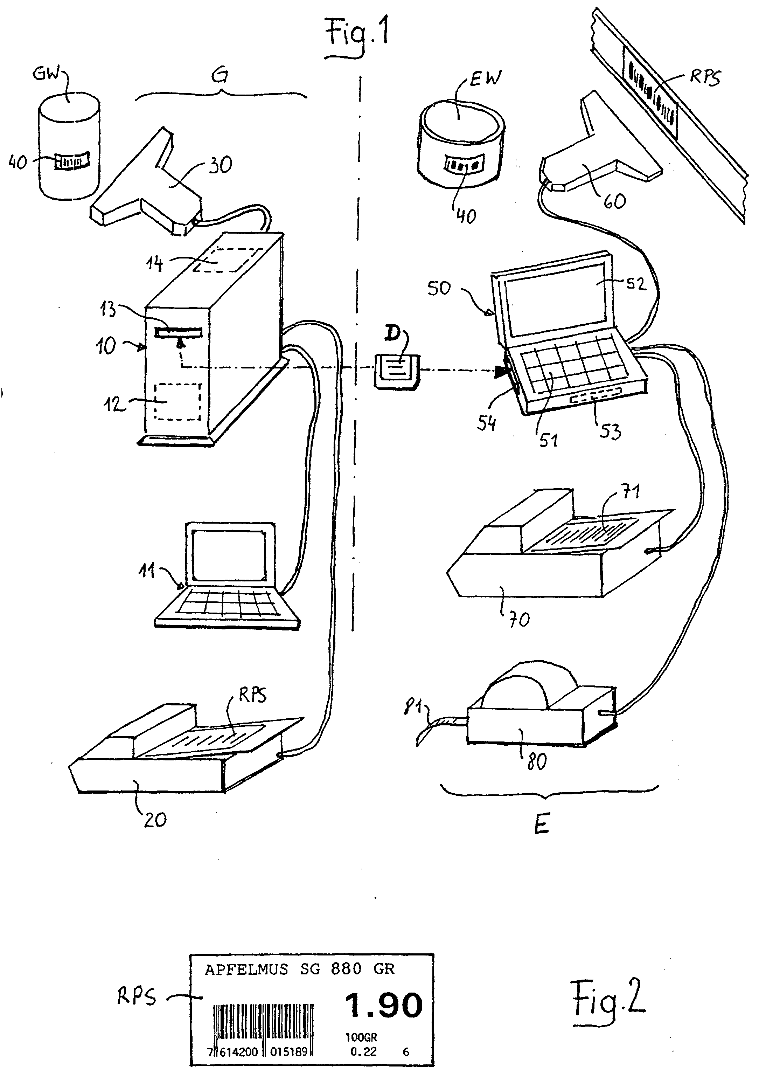

Die in der Fig. 1 gezeigte Vorrichtung umfasst darstellungsgemäss zwei lokal getrennte Geräte-Komplexe, von denen sich der in der Zeichnung linke Komplex G beim Abholgrosshändler (Cash & Carry - Abholgrossmarkt) und der in der Zeichnung rechte Komplex E beim Einzelhändler befindet. Die beiden Geräte-Komplexe sind durch ein gemeinsames, mit beiden zusammenwirkendes, transportables nicht-flüchtiges Speichermedium D in Form einer Diskette in Kommunikationsverbindung. Anstelle des transportablen Speichermediums D könnte selbstverständlich auch eine Datenverbindung z.B. mittels eines Telefoniekanals und entsprechender Schnittstellen (Modems) vorgesehen sein. Der in der Zeichnung rechte Geräte-Komplex E ist entsprechend der Anzahl der die Vorrichtung benutzenden Einzelhändler mehrfach vorhanden, während der in der Zeichnung linke Komplex selbstverständlich nur in einfacher Ausführung vorhanden zu sein braucht.

Der beim Abholgrosshändler installierte Geräte-Komplex G umfasst im wesentlichen einen Hauptrechner 10, einen an diesen angeschlossenen Schilderdrucker 20 und einen ebenfalls mit dem Hauptrechner zusammengeschlossenen optischen Haupt-Leser (Haupt-Scanner) 30. Der Hauptrechner 10 selbst umfasst im wesentlichen eine Eingabe/Ausgabe-Konsole 11, einen Hauptspeicher 12, ein Schreib/Lesegerät 13 für das genannte transportable Speichermedium D, einen Programmspeicher 14 und eine Reihe weiterer, für die Funktionsfähigkeit des Rechners als solchem erforderlicher konventioneller Komponenten und Einheiten, die jedoch für das Verständnis des Erfindungsgegenstands nicht von Bedeutung und deshalb hier nicht näher erläutert sind.

Der Hauptrechner 10, der Schilderdrucker 20, der optische Haupt-Leser 30, der Hauptspeicher 12, die Ein/Ausgabe-Konsole 11, das Schreib/Lesegerät 13 und der Programmspeicher 14 sowie die übrigen Komponenten und Einheiten des Hauptrechners 10 sind in an sich bekannter Weise zu einem funktionsfähigen Ganzen zusammengeschaltet. Die Zusammenschaltung dieser Komponenten, Einheiten und Peripheriegeräte an sich ist dem Computerfachmann geläufig und bedarf deshalb hier keiner weiteren Erläuterung.

Der Programmspeicher 14 enthält in an sich bekannter Weise das Programm, welches das Zusammenwirken der einzelnen Komponenten und Peripheriegeräte gemäss dem weiter unten noch im Detail erläuterten, erfindungsgemässen Funktionsschema steuert bzw. bewirkt. Die Programmierung des Hauptrechners selbst erfolgt in an sich üblicher Art und Weise und ist nicht Gegenstand der vorliegenden Erfindung.

Der Hauptspeicher 12 enthält die für das Warensortiment des Abholgrosshändlers spezifischen Warendaten. Dazu gehören neben Warenbezeichnungen, Artikelnummern, Verpackungseinheiten, Warenklassen- bzw. -gruppen und primär nur für den Abholgrosshändler selbst relevanten Daten insbesondere auch Richtverkaufspreise für den Einzelhändler. Diese Warendaten sind dem Hauptrechner 10 zugänglich und können von diesem in noch zu beschreibender Weise verwertet werden. Die Warendaten werden vom Abholgrosshändler in üblicher Weise regelmässig gepflegt, wobei dieser Vorgang nicht Gegenstand der vorliegenden Erfindung ist.

Das Schreib/Lesegerät 13 erlaubt, programmgesteuert auf dem Speichermedium D enthaltene Informationen in den Hauptrechner 10 einzulesen und umgekehrt Daten vom Hauptrechner auf das Speichermedium zu schreiben. Beim Speichermedium D handelt es sich beispielsweise um eine übliche magnetische Diskette oder vorzugsweise um eine Speicherkarte, die aus elektrisch les- und beschreibbaren Speicherbausteinen aufgebaut ist. Solche Speicherkarten besitzen eine höhere Speicherkapazität (2 MByte) als magnetische Disketten und weisen gegenüber diesen vor allem den Vorteil auf, dass sie keine beweglichen Teile enthalten. Es versteht sich, dass das Schreib/Lesegerät 13 auf die Art des Speichermediums D abgestimmt sein muss.

Die Ein/Ausgabe-Konsole 11 ist eine standardmässige Bedienungsschnittstelle zur Eingabe von Daten und Steuerbefehlen und zur Anzeige von Ergebnissen, Daten und Informationen durch bzw. für die Bedienungsperson.

Der optische Haupt-Leser (Haupt-Scanner) 30 ist konventioneller Bauart und gestattet das Einlesen von in maschinenlesbarer Form (üblicherweise in Form eines genormten Balken-Codes, z.B. eines sog. EAN-Codes) in einem Code-Feld 40 auf Waren GW oder deren Verpackung angebrachten Warendaten in den Hauptrechner. Scanner dieser Art und ihr Einsatz in Verkaufsläden sind an sich bekannt und bedürfen deshalb keiner weiteren Erläuterung.

Der Schilderdrucker 20 ist ein konventioneller Drucker üblicher Bauart, der zum Bedrucken von z.B. selbstklebenden Etiketten oder dünnen Karton-Etiketten geeignet ist. Der Schilderdrucker 20 dient hier in an sich bereits bekannter Weise zum Ausdrucken von Regalpreisschildern RPS aufgrund von im Hauptrechner 10 bzw. in dessen Hauptspeicher 12 enthaltenen Warendaten. Der Schilderdrucker 20 druckt dabei auf einen vorperforierten A4-Bogen mehrere Regalpreisschilder RPS, welche dann einfach manuell abgetrennt werden können. Die Erstellung solcher Regalpreisschilder RPS ist, wie schon erwähnt, an sich bekannt und bedarf deshalb keiner näheren Erläuterung.

Der in der Zeichnung rechte, beim Einzelhändler befindliche Geräte-Komplex E umfasst im wesentlichen einen elektronischen Handrechner (Hand-PC) 50, einen mit diesem zusammenwirkenden optischen Handleser (Hand-Scanner) 60, einen an den Handrechner anschliessbaren Listendrucker 70 und einen ebenfalls an den Handrechner anschliessbaren Bon-Drucker 80.

Der Handrechner 50 ist konventioneller Bauart und mit den üblichen Komponenten (u.a. Tastatur 51, Bildschirm 52) eines Personal-Computers ausgestattet und weist insbesondere einen Programm- und Arbeitsspeicher 53 und ein Schreib/Lesegerät 54 für das transportable Speichermedium D auf.

Der Listendrucker 70 ist ein Standard-Drucker für A4-Blätter oder Endlospapier. Der Bon-Drucker 80 ist ein üblicher Rollen-Drucker, wie er zum Ausdruck von Kassen-Bons üblicherweise eingesetzt wird. Der Hand-Leser 60 ist ein Standard-Laser-Scanner, wie er insbesondere auch in Verkaufsläden zum Ablesen von üblicherweise in speziellen Code-Feldern auf Waren oder deren Verpackung angebrachten codierten Wareninformationsdaten eingesetzt wird.

Die Zusammenschaltung der einzelnen Komponenten des Geräte-Komplexes E zu einem funktionsfähigen Ganzen ist genau wie im Fall des Geräte-Komplexes G auf an sich bekannte Weise realisiert und liegt im Können des durchschnittlichen Fachmanns, so dass sich auch hier eine nähere Erläuterung erübrigt.

Im folgenden werden die Funktionsweise und die Bedienung der beschriebenen Vorrichtung im einzelnen erläutert. Dabei wird davon ausgegangen, dass im Handrechner 50 des Einzelhändlers bzw. im Speicher 53 des Handrechners 50 sowie im Hauptrechner 10 des Abholgrosshändlers bzw. im Hauptspeicher 12 des Hauptrechners 10 die schon genannten warensortimentspezifischen Warendaten in gespeicherter Form vorliegen. Da die Sortimente von Abholgrosshändler und Einzelhändler in der Regel unterschiedlich umfangreich sind (der Einzelhändler führt nur in Ausnahmefällen das gesamte Warensortiment des Abholgrosshandlers), ist der Datenbestand beim Einzelhändler entsprechend weniger umfangreich als beim Abholgrosshändler.

Der Handrechner 50 ist für verschiedene Funktionen programmiert. Dazu gehoren primär der Standard-Kassenvorgang, der Kassentagesabschluss, die Aufnahme der Einkaufsliste, der Ausdruck der Einkaufsliste, die Inventur-Aufnahme, der Ausdruck einer Inventur-Liste und das Einlesen des transportablen Speichermediums. Für andere Anwender, z.B. Hotels oder Restaurants, können an deren spezielle Bedürfnisse angepasste andere Funktionen vorgesehen sein.

Für den Kassenvorgang und den Kassentagesabschluss arbeitet der Handrechner 50 mit dem Handleser 60 und dem Bon-Drucker 80 zusammen. An der Verkaufskasse werden von allen an einen Kunden verkauften Waren EW, die mit einem Code-Feld 40 versehen sind, mit dem Handleser 60 die Waren-Codes abgelesen und in den Handrechner 50 transferiert. Der Handrechner 50 veranlasst dann aufgrund der so eingelesenen Warendaten und der in ihm gespeicherten warensortimentspezifischen Warendaten über den Bon-Drucker 80 den Ausdruck eines Klartext-Verkaufsbons 81 für den Kunden. Gleichzeitig werden die Daten der verkauften Waren EW für den Tagesabschluss gespeichert. Das ausgewiesene Total der verkauften Waren wird manuell in eine konventionelle Registrierkasse unter einer reservierten Warengruppe übertragen. Mit dieser Registrierkasse werden auch die nicht mit Code-Feldern versehenen Waren, die z.B. von einem anderen Grossisten oder Lieferanten stammen können, erfasst. Mit der Funktion Tagesabschluss wird automatisch ein Protokoll aller mit dem Handleser erfassten Waren über den Bon-Drucker sortiert nach Warengruppen ausgedruckt. Die Klassifikation der Waren in einzelne Warengruppen ist natürlich ebenfalls im Handrechner und im Hauptrechner gespeichert.

Für die Inventur-Funktionen arbeitet der Handrechner 50 mit dem Handleser 60 und dem Listendrucker 70 zusammen. Der Einzelhändler liest dabei mittels des Handlesers die Waren-Codes der in den Regalen vorhandenen Waren von den Regalpreisschildern RPS ab und gibt die Warenmengen von Hand in den Handrechner ein. Dieser erstellt dann anhand der eingelesenen und eingegebenen Daten und der gespeicherten Warendaten eine z.B. nach Warengruppen geordnete Inventur-Liste und druckt diese über den Listendrucker aus.

Eine der wichtigsten Funktionen der Vorrichtung ist die semi-automatische Erstellung einer Einkaufsliste für den Einzelhändler. Dazu arbeitet der Handrechner 50 genau wie bei der Inventur-Aufnahme mit dem Handleser 60 und dem Listendrucker 70 zusammen. Der Einzelhändler geht dabei mit dem Handrechner 50, an den zu diesem Zeitpunkt nur der Handleser 60 angeschlossen ist, durch den Laden und liest von den Regalpreisschildern RPS die Waren-Codes der einzukaufenden Waren ab und gibt die Menge der jeweiligen Ware in den Handrechner ein. Daraufhin schliesst er den Listendrucker 70 wieder an den Handrechner 50 an. Dieser erstellt dann anhand der eingelesenen und eingegebenen Daten und der in ihm gespeicherten warensortimentspezifischen Warendaten eine nach Warengruppen geordnete Einkaufsliste 71 und druckt diese über den Listendrucker 70 aus. Die Sortierung nach Warengruppen hat dabei den Vorteil, dass der Einzelhändler bei seinem Einkauf heim Abholgrossmarkt systematisch und gezielt vorgehen kann, wodurch sich sein Einkaufsrundgang erheblich einfacher und zeitsparender gestaltet. Besonders zweckmässig ist dabei natürlich, wenn die Reihenfolge der Warengruppen auf der Einkaufsliste mit der körperlichen Anordnung der einzelnen Warengruppen im Abholgrossmarkt übereinstimmt. Ein typisches Beispiel einer auf diese Weise erstellten Einkaufsliste 71 ist auszugsweise in Fig. 3 dargestellt.

Die Funktion Speichermedium einlesen dient dazu, auf dem Speichermedium D aufgezeichnete sortimentspezifische Warendaten in den Handrechner bzw. dessen Speicher zu übertragen und dabei ggf. den dort vorhandenen Datenbestand zu aktualisieren.

Der beim Abholgrosshandler befindliche Hauptrechner 10 ist ebenfalls für eine Reihe von unterschiedlichen Funktionen programmiert. Dazu gehören u.a. die ublichen, für die Abwicklung des normalen Verkaufsvorgangs dienenden Funktionen, welche jedoch für die vorliegende Erfindung nicht von Belang und deshalb hier nicht naher beschrieben sind. Daneben ist der Hauptrechner 10 gemass der Erfindung aber noch zur automatischen Erstellung von Regalpreisschildern RPS aufgrund von Warendaten über die vom Einzelhändler eingekauften Waren und zur automatischen Aktualisierung der warensortimentspezifischen Warendaten des Einzelhändlers ausgebildet.

Die vom Einzelhändler eingekauften Waren GW werden an der Verkaufskasse des Abholgrosshandlers in der ubichen Weise mittels des optischen Hauptlesers 30 erfasst und in den Hauptrechner 10 eingelesen, welcher aus den so erfassten und den in ihm gespeicherten warensortimentspezifischen Warendaten die ublichen Einkaufsbelege erstellt und die Daten für die Kundenbuchhaltung und die Lagerbewirtschaftung bereitstellt bzw. auswertet. Gleichzeitig erstellt der Hauptrechner 10 aber auch noch aufgrund der eingelesenen Daten und der gespeicherten sortimentspezifischen Warendaten einen für den jeweiligen Einzelhändler individuellen Satz von Regalpreisschildern RPS und druckt diese über den Schilderdrucker 20 aus. Der individuelle Satz Regalpreisschilder kann sich dabei beispielsweise nur auf die gerade eingekauften Waren beschränken, er kann z.B. aber auch alle jene Waren betreffen, deren relevante Daten sich z.B. seit dem letzten Einkauf des Einzelhändlers geändert haben. Insbesondere gilt dies für Anderungen des Einzelhändler-Richtverkaufspreises. Der Einzelhändler räumt dann in seinem Laden die eingekauften Waren in die Regale ein und bringt die neuen bzw. geänderten Regalpreisschilder an. Eine Warenauszeichnung entfällt auf diese Weise.

Eine weitere wesentliche Funktion des Hauptrechners 10 besteht in der automatischen Aktualisierung des Bestands der warensortimentspezifischen Warendaten des Einzelhändlers. Dieser gibt dazu vor Beginn seines Einkaufsrundgangs sein persönliches transportables Speichermedium D an das Bedienungspersonal des Abholgrosshändlers ab. Letzteres führt das Speichermedium in den Hauptrechner 10 ein und veranlasst, dass die aktuellen Warendaten oder z.B. auch nur die geänderten Warendaten (z.B. neue Preise oder hinzugekommene oder weggefallene Artikel) auf das Speichermedium D geschrieben werden. Der Einzelhändler liest dann programmgesteuert die auf das Speichermedium D aufgezeichneten, neuen bzw. geänderten Warendaten in seinen Handrechner 50 ein und aktualisiert auf diese Weise seinen individuellen Datenbestand.

Der Einzelhändler ist naturlich nicht an die ihm vom Abholgrosshandler auf die beschriebene Weise zur Verfügung gestellten Regalpreisschilder gebunden. Er kann, z.B. mittels eines eigenen Schilderdruckers, selbstverständlich auch seine eigenen Regalpreisschilder anfertigen und auch die Verkaufspreise für einzelne oder alle Waren in seinem Handrechner bzw. im in diesem gespeicherten warensortimentspezifischen Datenbestand ändern. Der Handrechner 50 kann dazu mit entsprechenden Funktionserweiterungen ausgestattet sein. In diesen Fällen kann der Einzelhändler aber dann nicht mehr in vollem Umfang von den ihm vom Abholgrosshändler gebotenen Aktualisierungs-Service profitieren, sondern muss sich um die Pflege seines Datenbestands und Anpassung seiner Regalpreisschilder selber kümmern. Die semi-automatische Erstellung einer Einkaufsliste ist jedoch auch in diesen Fallen noch moglich.

Abholgrosshändler geben vielfach auch Reklamematerial mit Wareninformationen an ihre Einzelhändler ab. Darin können den Klartextinformationen über Waren auch codierte Informationen zugeordnet sein, die dann durch den Einzelhändler ebenfalls mittels des optischen Handlesers erfasst und zur Aktualisierung seines Warendatenbestands verwendet werden können. Aufgrund der so erfassten Wareninformationen kann der Einzelhändler auch einen aktualisierten Satz Regalpreisschilder beim Abholgrosshandler beziehen.

Durch die vorstehend beschriebene erfindungsgemasse Vorrichtung konnen Kleinbetriebe aus Handel und Gewerbe mit minimalem Kapitaleinsatz mindestens genau so rationell arbeiten wie Grossfilialbetriebe.

## Patentansprüche

1. Vorrichtung zur Erstellung von visuell lesbaren Datenträgern für die Abwicklung des Warenverkehrs eines Einzelhändlers, insbesondere für die Steuerung des Waren- und Informationsflusses zwischen einem Abholgrosshändler und einem seine Waren von diesem beziehenden Einzelhändler, enthaltend:
- einen Hauptrechner (10) für den Abholgrosshändler, welcher Hauptrechner
- mit einem Hauptspeicher (12) ausgestattet ist, der warensortimentspezifische Warendaten, insbesondere Einzelhändler-Richtverkaufspreise enthält,
- mit einem Schilderdrucker (20) zum Ausdrucken von Klartext und codierte Warendaten tragenden Regalpreisschildern (RPS) für den Einzelhändler zusammenarbeitet.
- und mit einem ersten Schreib/Lesegerät (13) für ein transportables nichtflüchtiges Speichermedium (D) ausgestattet ist,
- sowie einen Handrechner (50) für den Einzelhändler, welcher Handrechner
- mit einem zweiten Schreib/Lesegerat (54) für das genannte transportable Speichermedium ausgestattet ist.
- mit einem optischen Handleser (Scanner) (60) zum Einlesen von auf den Regalpreisschildern (RPS) des Einzelhändlers enthaltenen Warendaten in den Handrechner (50) zusammenarbeitet,
- und mit einem Listendrucker (70) zum Ausdrucken einer Wareneinkaufsliste (71) für den Einzelhändler zusammenarbeitet,
- wobei der Hauptrechner (10) dazu ausgebildet ist,
- für den Einzelhändler relevante sortimentspezifische Warendaten über das genannte erste Schreib/Lesegerat (13) auf das transportable Speichermedium (D) zu schreiben und
- aufgrund eingegebener oder mittels eines mit ihm zusammenarbeitenden optischen Hauptlesers (Scanners) (30) eingelesener Daten über einen vom Einzelhändler heim Abholgrosshändler getätigten Wareneinkauf und der im Hauptspeicher (12) enthaltenen warensortimentspezifischen Warendaten entsprechende, die eingekauften Waren betreffende Regalpreisschilder (RPS) über den Schilderdrucker (20) auszudrucken,
- und wobei der Handrechner (50) dazu ausgebildet ist,
- die auf dem transportablen Speichermedium (D) enthaltenen warensortimentspezifischen Warendaten über das genannte zweite Schreib/Lesegerät (54) einzulesen und
- aufgrund dieser warensortimentspezifischen Warendaten und von mittels des optischen Handlesers (60) von den Regalpreisschildern (RPS) des Einzelhändlers abgelesenen Warendaten sowie von manuell eingegebenen Mengenangaben über den Listendrucker (70) eine nach festgelegten Kriterien, insbesondere nach Warengruppen sortierte Einkaufsliste (71) für den Einzelhändler auszudrucken.

2. Vorrichtung nach Anspruch 1, **dadurch gekennzeichnet, dass** sie einen mit dem Handrechner (50) zusammenarbeitenden Bon-Drucker (80) aufweist, wobei der Handrechner (50) dazu ausgebildet ist, aufgrund von mittels des optischen Handlesers (60) von auf Waren (EW) angebrachten Code-Feldern (40) abgelesenen Warendaten ggf. in Verbindung mit den im Handrechner (50) gespeicherten warensortimentspezifischen Warendaten einen Klartext-Verkaufs-Bon (81) betreffend an einen Kunden des Einzelhändlers verkaufte Waren über den Bon-Drukker (80) auszudrucken.

3. Vorrichtung nach Anspruch 1 oder 2, **dadurch gekennzeichnet, dass** das transportable nicht-flüchtige Speichermedium (D) eine aus elektrisch les- und beschreibbaren Speicherbausteinen aufgebaute Speicherkarte ist.

4. Vorrichtung nach einem der Ansprüche 1-3, **dadurch gekennzeichnet, dass** der Handrechner (50) dazu ausgebildet ist, aufgrund von mittels des optischen Handlesers (60) von auf Waren (EW) angebrachten Code-Feldern (40) abgelesenen Warendaten ggf. in Verbindung mit den im Handrechner (50) gespeicherten warensortimentspezifischen Warendaten sowie von manuell eingegebenen Mengenangahen ein Inventur-Protokoll zu erstellen und über den Listendrucker (70) auszudrucken.

## Claims

1. A device for manufacturing visually readable data carriers for managing the circulation of a retailer's goods, in particular for controlling the flow of goods and information between a cash & carry wholesaler and a retailer supplied with goods by the former, comprising:
- a main computer (10) for the cash & carry wholesaler, which main computer
- is provided with a main memory (12) containing merchandise assortment-specific article data, in particular suggested retail prices,
- interacts with a ticket printer (20) for printing shelf price tickets (RPS) bearing plain language and coded article data for the retailer
- and is provided with a first write/read device (13) for a transportable non-volatile memory medium (D),
- and a hand computer (50) for the retailer, which hand computer
- is provided with a second write/read device (54) for the cited transportable memory medium,
- interacts with an optical hand scanner (60) for reading article data provided on the retailer's shelf price tickets (RPS) into the hand computer (50)
- and interacts with a list printer (70) for printing a goods shopping list (71) for the retailer,
- the main computer (10) being equipped
- to write assortment-specific article data relevant to the retailer via the cited first write/read device (13) onto the transportable memory medium and
- to print, based on data which are entered or read in by means of an optical main scanner (30) interacting with that computer and which pertain to a purchase of goods made by the retailer at the cash & carry wholesaler's and also based on the merchandise assortment-specific article data contained in the main memory (12), via the ticket printer (20) corresponding shelf price tickets (RPS) pertaining to the purchased goods,
- and the hand computer (50) being equipped
- to read in the merchandise assortment-specific article data contained on the transportable memory medium (D) via the cited second write/read (54) device and
- to print, based on these merchandise assortment-specific article data and on article data which are read off from the retailer's shelf price tickets (RPS) by means of the optical hand scanner (60) as well as on manually entered amounts, via the list printer (70) a shopping list (71) for the retailer which is sorted according to specified criteria, in particular according to article groups.

2. A device according to claim 1, **characterised in that** it comprises a receipt printer (80) interacting with the hand computer (50), which hand computer (50) is equipped to print, based on article data read off by means of the optical hand scanner (60) from code fields (40) provided on articles (EW), optionally in conjunction with the merchandise assortment-specific article data stored in the hand computer (50), via the receipt printer (80) a plain language receipt (81) pertaining to goods sold to a customer of the retailer.

3. A device according to either claim 1 or claim 2, **characterised in that** the transportable non-volatile memory medium (D) is a memory card composed of electrically readable and writable memory components.

4. A device according to any one of claims 1-3, **characterised in that** the hand computer (50) is equipped to manufacture an inventory protocol based on article data read off by means of the optical hand scanner (60) from code fields (40) provided on articles (EW), optionally in conjunction with merchandise assortment-specific article data stored in the hand computer (50) and with manually entered amounts, and to print said inventory protocol via the list printer (70).

## Revendications

1. Dispositif pour la création de porteurs de données lisibles visuellement pour le déroulement de l'acheminement de marchandises chez un détaillant, en particulier pour la gestion des flux de marchandises et d'informations entre un grossiste et un détaillant qui s'approvisionne auprès de ce dernier, ce dispositif comportant :
- un ordinateur central (10) pour le grossiste, cet ordinateur central
- comportant une unité de mémoire centrale (12) qui contient des données spécifiques relatives aux assortiments de marchandises, en particulier des prix indicatifs pour le détaillant,
- coopérant avec une imprimante d'affichettes (20) pour imprimer des affichettes de prix (RPS) pour des rayonnages portant du texte lisible et des données codées pour le détaillant,
- et étant pourvu d'un premier dispositif de lecture et d'écriture (13) pour un support transportable (D) de données non volatiles,
- ainsi qu'un ordinateur portable (50) pour le détaillant, cet ordinateur portable
- comportant un deuxième dispositif de lecture et d'écriture (54) pour ledit support transportable (D) de données
- coopérant avec un dispositif de lecture optique portable (scanner) (60) pour la lecture et l'enregistrement dans l'ordinateur portable (50) du détaillant, de données relatives aux marchandises portées par les affichettes de prix pour rayonnages (RPS)
- et coopérant avec une imprimante de listes (70) pour l'impression d'une liste d'achats (71) pour le détaillant,
- dans lequel, l'ordinateur central (10) est agencé pour
- enregistrer sur le support de données (D) transportable des données pertinentes pour le détaillant, relatives aux assortiments de marchandises, au moyen dudit premier dispositif de lecture et d'enregistrement (13),
- imprimer au moyen de l'imprimante (20) d'affichettes, les affichettes de prix pour rayonnages (RPS) élaborées, pour des marchandises achetées lors d'une acquisition de marchandises par le détaillant chez le grossiste, en fonction de données stockées ou enregistrées, au moyen d'un dispositif de lecture optique principal (scanner) (30) coopérant avec ledit ordinateur central, et de celles contenues dans l'unité de mémoire centrale (12)
- et dans lequel l'ordinateur portable (50) est agencé pour
- lire et enregistrer les données spécifiques des assortiments de marchandises mémorisées par le support de données (D) transportable au moyen dudit deuxième dispositif de lecture et d'enregistrement (54), et
- imprimer pour le détaillant une liste d'achat (71) au moyen de l'imprimante de listes (70), cette liste étant établie selon des critères déterminés, en particulier une répartition par groupes de marchandises, et sur la base desdites données spécifiques des assortiments de marchandises et de données obtenues par lecture au moyen du dispositif de lecture optique (60), des affichettes de prix de rayonnages (RPS) du détaillant et par introduction manuelle d'informations de quantités.

2. Dispositif selon la revendication 1, **caractérisé en ce qu'**il comporte une imprimante de tickets (80) qui coopère avec l'ordinateur portable (50), cet ordinateur portable (50) étant agencé pour imprimer au moyen de l'imprimante de tickets (80), un ticket portant un texte lisible (81) et correspondant à des marchandises vendues par le détaillant à un client, ce ticket étant élaboré à partir de données relatives aux marchandises (EW) et contenues dans une zone de codage (40) portée par les marchandises et lues au moyen du dispositif de lecture optique (60) et le cas échéant de données mémorisées dans ledit ordinateur portable (50) et relatives à des informations concernant les assortiments de marchandises.

3. Dispositif selon les revendications 1 et 2, **caractérisé en ce que** ledit support de données non volatiles (D) transportable est constitué d'une carte à mémoire composée d'éléments de mémoire à lecture et enregistrement électriques.

4. Dispositif selon l'une des revendications 1-3, **caractérisé en ce que** l'ordinateur portable (50) est agencé pour élaborer un protocole d'inventaire et pour l'imprimer au moyen de l'imprimante de listes (70), à partir de données relatives aux marchandises (EW) et contenues dans une zone de codage (40) portée par les marchandises et lues au moyen du dispositif de lecture optique (60) et le cas échéant de données mémorisées dans ledit ordinateur portable (50) et relatives à des informations concernant les assortiments de marchandises ainsi que des informations relatives aux quantités, introduites manuellement.
